# FASCICULE DE BREVET EUROPEEN

(11) **EP 2 454 034 B1**
(45) Date de publication et mention de la délivrance du brevet: **24.04.2013**
(21) Numéro de dépôt: 10751981.1
(22) Date de dépôt: 08.07.2010
(51) Int. Cl.: B21C 37/12, B21F 17/00, B65H 81/08, E21B 36/04, F16L 9/18, E21B 36/00, F16L 53/00

(54) **METHODE DE FABRICATION DE CONDUITES TUBULAIRES RIGIDES A DOUBLE ENVELOPPE ET INSTALLATION DEDIEE A LA FABRICATION DE CES CONDUITES**
VEFAHREN ZUR HERSTELLUNG STARRER ROHRFÖRMIGER LEITUNGEN MIT DOPPELUMMANTELUNG UND ANLAGE ZUR HERSTELLUNG DERARTIGER ROHRLEITUNGEN
METHOD FOR MANUFACTURING RIGID TUBULAR PIPES HAVING DOUBLE CASING, AND FACILITY DEDICATED TO MANUFACTURE OF SAID PIPES

(30) Priorité: 17.07.2009 FR 0903540
(43) Date de publication de la demande: 23.05.2012
(73) Titulaire: Technip France, 92400 Courbevoie (FR)
(72) Inventeur: ESPINASSE, Philippe, F-76420 Bihorel (FR); DE RUMIGNY, Jacques, F-76940 Heurteauville (FR)
(74) Mandataire: Bertrand, Didier
(86) Numéro de dépôt international: PCT/FR2010/051446
(87) Numéro de publication internationale: WO 2011/007083

(56) Documents cités:
- WO-A1-97/36063
- GB-A- 2 084 284
- SPENCE M A ET AL: "BI-METAL, CRA-LINED PIPE EMPLOYED FOR NORTH SEA FIELD DEVELOPMENT" OIL AND GAS JOURNAL, PENNWELL, HOUSTON, TX, US, vol. 97, no. 18, 3 mai 1999 (1999-05-03), pages 80-82,84, XP000833559 ISSN: 0030-1388

## Description

La présente invention se rapporte à une méthode de fabrication des conduites tubulaires rigides à double enveloppe et à une installation dédiée à la fabrication de ces conduites. L'invention concerne également la conduite tubulaire rigide à double enveloppe obtenue selon ladite méthode de fabrication.

Ces conduites tubulaires rigides, faites de deux tubes rigides engagés l'un dans l'autre, sont destinées au transport des hydrocarbures, notamment dans les fonds marins, et permettent de les maintenir à une température donnée afin que les paraffines notamment qu'il contient, ne figent pas et les obstruent. En effet, l'hydrocarbure est initialement à une température relativement élevée, lorsqu'il se trouve dans le sous-sol marin et il se refroidit sensiblement lorsqu'il est véhiculé dans les conduites entre le fonds marin et la surface. L'isolation de la double paroi de la conduite rigide permet ainsi de maintenir l'hydrocarbure à une température proche de sa température d'origine. Toutefois, lorsque l'extraction est réalisée à grande profondeur, où la température au niveau du fond marin est inférieure à 5 °C par exemple, les paraffines en particulier se figent et forment des bouchons qui obstruent la conduite. Dans ces conditions, la double enveloppe isolée n'est pas suffisante.

Afin d'augmenter la température de l'hydrocarbure circulant dans la conduite, il a été imaginé de lui apporter de l'énergie thermique supplémentaire. Ainsi, le document US6564011 divulgue une conduite rigide, comportant un tube rigide et un câble chauffant que l'on installe autour du tube rigide. L'ensemble étant recouvert d'une gaine en matière plastique. Un tel dispositif permet certes, de fournir de l'énergie thermique à l'hydrocarbure circulant à l'intérieur du tube rigide, en revanche il est extrêmement coûteux car une partie de cette énergie thermique s'échappe à l'extérieur de la conduite à travers la gaine en matière plastique et est perdue.

Il a également été imaginé de faire circuler un courant électrique entre les deux tubes rigides engagés l'un dans l'autre des conduites tubulaires rigides à double enveloppe pour provoquer par effet joule, l'échauffement des tubes rigides. On pourra notamment se référer au document GB 2 084 284, lequel divulgue un tel dispositif. Cependant, il nécessite d'une part de prévoir une isolation électrique placée dans l'annulaire entre les deux tubes rigides pour éviter la formation d'arcs électriques et d'autre part, des entretoises électriquement conductrices pour assurer le passage du courant entre la conduite interne et externe. En outre, une telle conduite tubulaire rigide consomme une grande quantité d'énergie électrique.

Aussi, un problème qui se pose et que vise à résoudre la présente invention est de fournir une conduite tubulaire rigide qui permette de véhiculer les hydrocarbures sur les fonds marins à grande profondeur sans qu'il se forme à l'intérieur, des bouchons de paraffine notamment ; et qui soit peu consommatrice d'énergie. La présente invention vise également à fournir une méthode de fabrication et une installation pour la mise en oeuvre de la méthode pour fabriquer une conduite tubulaire rigide apte à véhiculer les hydrocarbures sur des fonds marins de grande profondeur.

Dans le but de résoudre ce problème, et selon un premier aspect, la présente invention propose une méthode de fabrication de conduites tubulaires rigides à double enveloppe pour le transport des hydrocarbures, ladite méthode étant du type selon laquelle : on fournit un tube rigide interne et un tube rigide externe destinés à être engagés l'un dans l'autre ; on fournit un bâti de maintien d'une extrémité d'entrée dudit tube rigide externe ; on fournit un tablier équipé de moyens de saisie activables pour saisir ledit tube interne rigide, ledit tablier étant mobile en translation entre une position rapprochée dudit bâti de maintien et une position écartée dudit bâti de maintien ; on active lesdits moyens de saisie activables et on entraîne ledit tablier vers ladite position rapprochée pour engager ledit tube rigide interne à l'intérieur dudit tube rigide externe en ménageant un espace annulaire entre les tubes rigides ; puis, on désactive lesdits moyens de saisie activables pour libérer ledit tube rigide interne lorsque ledit tablier est entraîné en retour vers ladite position écartée ; selon l'invention on fournit en outre des câbles chauffants pour pouvoir appliquer une portion de longueur de câbles chauffants le long dudit tube rigide interne lorsque ledit tablier est entraîné en mouvement ; et durant l'entraînement dudit tablier vers ladite position rapprochée, on engage ladite portion de longueur de câbles chauffants appliquée le long dudit tube rigide interne à l'intérieur dudit espace annulaire.

Ainsi, une caractéristique de l'invention réside dans la mise en oeuvre d'un câble chauffant à l'intérieur de l'espace annulaire qui s'étend entre les deux tubes rigides de la conduite rigide durant sa fabrication, sans modifier considérablement les installations existantes de fabrication des conduites à double enveloppe d'une part, et sans augmenter la durée de fabrication de ces conduites. Aussi, ce câble chauffant est installé quasiment en temps masqué à l'intérieur de l'annulaire de la conduite rigide lorsque le tube rigide interne est enfilé à l'intérieur du tube rigide externe. Ainsi qu'on l'expliquera ci-après plus en détail, on applique la portion de longueur de câbles chauffants le long dudit tube rigide interne, soit simultanément lorsque ledit tablier est entraîné en mouvement, ou bien séquentiellement.

Jusqu'à présent, aucune méthode simple et économique n'avait été mise au jour pour insérer un câble chauffant à l'intérieur de l'annulaire une conduite rigide à double enveloppe. En outre, avantageusement, on applique le câble chauffant contre le tube interne et on le recouvre d'un matériau isolant avant d'insérer l'ensemble à l'intérieur du tube externe. La mise en oeuvre d'un tel câble doublé d'une isolation thermique, permet de réduire substantiellement la consommation en énergie électrique pour alimenter le câble chauffant et fournir l'énergie thermique nécessaire à l'hydrocarbure véhiculé dans la conduite.

Selon un mode particulier de mise en oeuvre de l'invention, on applique ladite portion de longueur de câbles chauffants en spirale autour dudit tube rigide interne. Ainsi, d'une part on augmente la longueur de câble chauffant autour du tube interne et le transfert thermique s'effectue de façon plus homogène à l'hydrocarbure, et d'autre part, on s'affranchit des dégradations par élongation du câble chauffant lorsque la conduite est posée selon la méthode du rigide déroulé.

En outre, de façon avantageuse, on applique simultanément une pluralité de portions de longueur de câbles chauffants ce qui permet d'augmenter plus encore la quantité d'énergie thermique que l'on peut fournir à l'hydrocarbure.

Préférentiellement, on ploie et on stocke lesdits câbles chauffants, et on déploie ladite portion de longueur de câbles chauffants stockés pour appliquer ladite portion de longueur de câbles chauffants déployée le long dudit tube rigide interne. Ainsi qu'on l'expliquera plus en détail ci-après, les câbles chauffants ployés et stockés sont plus aisés à entraîner en mouvement autour du tube rigide interne.

Selon un mode de réalisation particulier on entraîne lesdits câbles chauffants ployés en rotation autour dudit tube rigide interne pour pouvoir appliquer ladite portion de longueur de câbles chauffants en spirale. On observera que la pluralité de portions de longueur de câbles chauffants peut être déployée également en tournant autour de la conduite interne afin de les enrouler en spirale sensiblement parallèlement entre elles.

Selon une première variante de réalisation de l'invention, on applique une portion de longueur de câbles chauffants le long dudit tube rigide interne lorsque ledit tablier est entraîné en mouvement vers ladite position rapprochée. Ainsi, on vient appliquer la portion de longueur de câbles chauffants autour du tube rigide interne au fur et à mesure que ce dernier est engagé à l'intérieur du tube rigide externe.

Selon une deuxième variante de réalisation, on applique une portion de longueur de câbles chauffants le long dudit tube rigide interne lorsque ledit tablier est entraîné en retour vers ladite position écartée. Ainsi, le câble chauffant est déroulé et appliqué contre le tube interne lorsque le tablier est entraîné en retour pour pouvoir saisir à nouveau le tube interne et engager une autre longueur de tube interne à l'intérieur du tube externe. De la sorte, le câble chauffant est appliqué durant le retour du tablier vers une position de rechargement qui est nécessaire pour réaliser la conduite rigide. En outre, le déploiement en spirale peut s'effectuer simplement, toujours lorsque le tablier est entraîné en retour, c'est-à-dire en temps masqué.

Par ailleurs, et dans le cas de cette deuxième variante de réalisation, on stocke avantageusement lesdits câbles chauffants ployés sur ledit tablier mobile, ce qui facilite grandement l'application de la portion de longueur de câbles chauffants. Car en effet, grâce à cette caractéristique, l'installation de mise en oeuvre de la méthode objet de l'invention est plus compacte. Et au surplus, lorsqu'on applique simultanément une pluralité de portions de longueur de câbles chauffants, il n'y a pas de risque d'emmêlement des portions de longueur.

Toujours dans le cas de cette deuxième variante de réalisation, mais selon un autre mode de mise en oeuvre que l'on décrira plus en détail dans la suite de la description, on applique la portion de longueur de câbles chauffants le long du tube rigide indépendamment du retour du tablier vers ladite position de rechargement. Ce retour peut avoir lieu simultanément, avant ou bien encore après avoir appliqué le câble chauffant le long du tube rigide.

De plus, de manière avantageuse, on enserre radialement le tube rigide interne pour saisir ledit tube rigide interne de manière à le préserver de toute déformation et conserver son intégrité.

Préférentiellement, selon la deuxième variante de réalisation de l'invention, et lorsque les câbles chauffants ployés sont stockés en arrière du tablier, à l'opposé du bâti de maintien, on guide avantageusement lesdits câbles chauffants par rapport audit tablier lorsque ledit tablier est entraîné en retour, de manière à faciliter leur coulissement par rapport au tablier et aussi à les appliquer directement sur la conduite interne. De plus, on déploie ladite portion de longueur de câbles chauffants stockés à travers lesdits moyens de saisie activables lorsqu'ils sont inactifs et que le tablier est entraîné en retour.

Selon un autre aspect, la présente invention propose une installation de fabrication des conduites tubulaires rigides à double enveloppe pour le transport des hydrocarbures, lesdites conduites tubulaires comprenant un tube rigide interne engagé à l'intérieur d'un tube rigide externe, ladite installation comprenant un bâti de maintien d'une extrémité d'entrée dudit tube rigide externe et un tablier mobile en translation entre une position rapprochée dudit bâti de maintien et une position écartée dudit bâti de maintien, ledit tablier comprenant des moyens de saisie dudit tube interne rigide pour pouvoir saisir ledit tube interne rigide et engager ledit tube rigide interne à l'intérieur dudit tube rigide externe en ménageant un espace annulaire entre les deux tubes rigides lorsque ledit tablier est entraîné vers ladite position rapprochée, lesdits moyens de saisie étant aptes à libérer ledit tube rigide interne lorsque ledit tablier est entraîné en retour, vers ladite position écartée ; et selon l'invention, l'installation comprend en outre des organes de stockage pour stocker des câbles chauffants stockés et des moyens d'application pour pouvoir appliquer une portion de longueur de câbles chauffants stockés le long dudit tube rigide interne lorsque ledit tablier est entraîné en mouvement ; et durant l'entraînement dudit tablier vers ladite position rapprochée, ladite portion de longueur de câbles chauffants appliquée le long dudit tube rigide interne est engagée à l'intérieur dudit espace annulaire.

Ainsi, l'installation de fabrication des conduites est-elle relativement simple à mettre en oeuvre à partir d'une installation classique de fabrication de conduite à double enveloppe. La portion de longueur de câbles chauffants stockés est appliquée le long du tube rigide interne, et le tablier est entraîné en mouvement soit simultanément, ou bien séquentiellement.

Avantageusement, lesdits organes de stockage desdits câbles chauffant stockés sont montés sur lesdits moyens d'application ce qui permet, ainsi qu'on l'a expliqué ci-dessus, de monter l'installation dans un espace relativement restreint.

Selon un premier mode de réalisation de l'installation, lesdits moyens d'application sont montés autour dudit tube interne et à une distance déterminée dudit bâti de maintien. De la sorte, les moyens d'application sont montés en position fixe selon une direction parallèle au tube rigide interne et par rapport au bâti de maintien, tandis que le tablier est mobile en translation par rapport à ses moyens d'application. Aussi, ce premier mode de réalisation de l'installation, permet de mettre en oeuvre la méthode objet de l'invention selon la première variante d'exécution précitée.

Selon un deuxième mode de réalisation de l'installation, lesdits moyens d'application sont montés sur ledit tablier, et ils sont donc mobiles en translation avec le tablier, par rapport au bâti de maintien. Ce deuxième mode de réalisation permet lui, de mettre en oeuvre la méthode objet de l'invention selon la deuxième variante d'exécution précisée ci-dessus et que l'on décrira plus en détail ci-après.

Ainsi, dès lors que les organes de stockage des câbles chauffants sont montés également sur le tablier, l'installation de fabrication des conduites est-elle relativement simple et mise en oeuvre à partir d'une installation classique de fabrication de conduite à double enveloppe. Par conséquent, le surcoût de fabrication de ces conduites tubulaires rigides est sensiblement équivalent au coût du câble chauffant.

Avantageusement, lesdits moyens de saisie sont alors solidaires desdits moyens d'application, qui eux-mêmes sont solidaires du tablier. En outre, selon un mode particulier de mise en oeuvre de l'invention, lesdits moyens d'application comprennent un barillet monté à rotation autour d'un axe sensiblement confondu avec ledit tube rigide interne. Et ainsi, lorsque que lesdits organes de stockage desdits câbles chauffant stockés sont montés sur le barillet, ce dernier permet de les entraîner autour du tube rigide interne tout en autorisant le déploiement d'une portion de longueur de câbles chauffants.

De la sorte, et selon le deuxième mode de réalisation de l'installation, le barillet peut être entraîné en rotation lorsque le tablier est entraîné en retour et ainsi il permet d'enrouler la portion de longueur de câbles chauffants en spirale autour du tube rigide interne. Ainsi, le câble chauffant est enroulé en spirale d'une façon simple, avec un pas que l'on peut ajuster en réglant les vitesses relatives de rotation du barillet et de translation en retour du tablier. On définit par là même, l'angle d'hélice qui doit se situé entre 10 et 30°, par exemple 15°.

On observera qu'un barillet équipé des organes de stockage des câbles chauffants peut également être installé avantageusement, conformément à l'invention selon le premier mode de réalisation de l'installation, et ce, entre le bâti de maintien et le tablier. Au surplus, selon ce mode particulier de mise en oeuvre, l'installation de fabrication des conduites tubulaires rigides comprend, en outre, un chariot mobile en translation entre ledit tablier et ledit bâti de maintien, et lesdits moyens d'application sont montés sur ledit chariot mobile. De la sorte, on applique les câbles chauffants le long du tube rigide interne au moyen du chariot mobile que l'on entraîne en translation entre une position rapprochée du bâti de maintien vers une position écartée de ce dernier. Le tablier situé en amont du chariot mobile est lui, entraîné en translation indépendamment de celui-ci, soit simultanément, soit séquentiellement.

Par ailleurs, lesdits organes de stockage comprennent de manière avantageuse une pluralité de bobines montées à rotation respectivement autour de leur axe sur lesdits moyens d'application, de manière à pouvoir appliquer simultanément en spirale une pluralité de portions de longueur de câbles chauffants. De la sorte, les bobines sur lesquelles sont enroulés les câbles chauffants permettent de dérouler les câbles à mesure que le tablier est entraîné en translation, car les câbles chauffants déjà déroulés sont emprisonnés entre les deux tubes rigides. Il est ainsi nul besoin de prévoir une motorisation particulière de ces bobines.

De plus, selon une autre caractéristique avantageuse, lesdits moyens de saisie comprennent des mors activables, par exemple au moyen de vérins hydrauliques, aptes à enserrer radialement le tube rigide interne pour saisir ledit tube rigide interne.

On expliquera ci-après plus en détail le mode de fonctionnement de ces mors activables.

D'une manière particulièrement avantageuse, lesdits mors activables sont installés sur ledit barillet de manière pouvoir ajuster et guider le câble chauffant entre les mors activables sans l'endommager lorsque le tablier est entraîné en retour.

Selon encore un autre mode de mise en oeuvre avantageux de l'invention, ledit tablier présente un passage central, pour autoriser le passage libre en translation dudit tube interne rigide, et dans le cas de la mise en oeuvre de la deuxième variante d'exécution, pour autoriser également le passage de ladite portion de longueur de câbles chauffants déployée. Ainsi, le tablier peut être entraîné en translation sans interférer avec la conduite interne ou les câbles chauffants. Au surplus, le tablier étant avantageusement constitué d'une plaque épaisse rectangulaire installée sensiblement perpendiculairement à la conduite, il est aisé de prévoir au moins deux vérins hydrauliques d'entraînement de ce tablier, de part et d'autre du passage central. De la sorte, les mors activables étant installés en regard du passage central, la poussée procurée par les deux vérins hydrauliques est directement appliquée au tube interne pour pouvoir l'insérer à force à l'intérieur du tube externe comme on l'expliquera plus en détail ci-après.

De manière préférentielle, ledit tablier comprend des moyens de guidage pour guider ladite portion de longueur de câbles chauffants déployée en translation à travers ledit tablier de manière à ne pas endommager les câbles chauffants d'une part et à pouvoir les appliquer précisément contre le tube interne d'autre part.

Selon encore un autre aspect, la présente invention concerne une conduite tubulaire rigide obtenue selon la méthode précitée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique de détail en coupe axiale d'une installation conforme à l'invention pour fabriquer des conduites rigides tubulaires, selon un premier mode de mise en oeuvre de l'invention ;
- la Figure 2 est une vue schématique en coupe axiale de l'installation conforme à l'invention selon le premier mode de mise en oeuvre de l'invention, dans une première position de travail;
- la Figure 3 est une vue schématique en coupe axiale de l'installation représentée sur la Figure 2 dans une deuxième position de travail ;
- la Figure 4 est une vue schématique de détail en coupe axiale d'une installation conforme à l'invention pour fabriquer des conduites rigides tubulaires, selon un deuxième mode de mise en oeuvre de l'invention ;
- la Figure 5 est une vue schématique de détail en coupe axiale d'une installation conforme à l'invention pour fabriquer des conduites rigides tubulaires, selon un troisième mode de mise en oeuvre de l'invention ;
- la Figure 6 est une vue schématique de détail en coupe axiale d'une installation conforme à l'invention pour fabriquer des conduites rigides tubulaires, selon un quatrième mode de mise en oeuvre de l'invention ; et,
- les Figures 7A et 7B sont des vues schématiques de détail en coupe axiale d'une installation conforme à l'invention pour fabriquer des conduites rigides tubulaires, selon un cinquième mode de mise en oeuvre de l'invention.

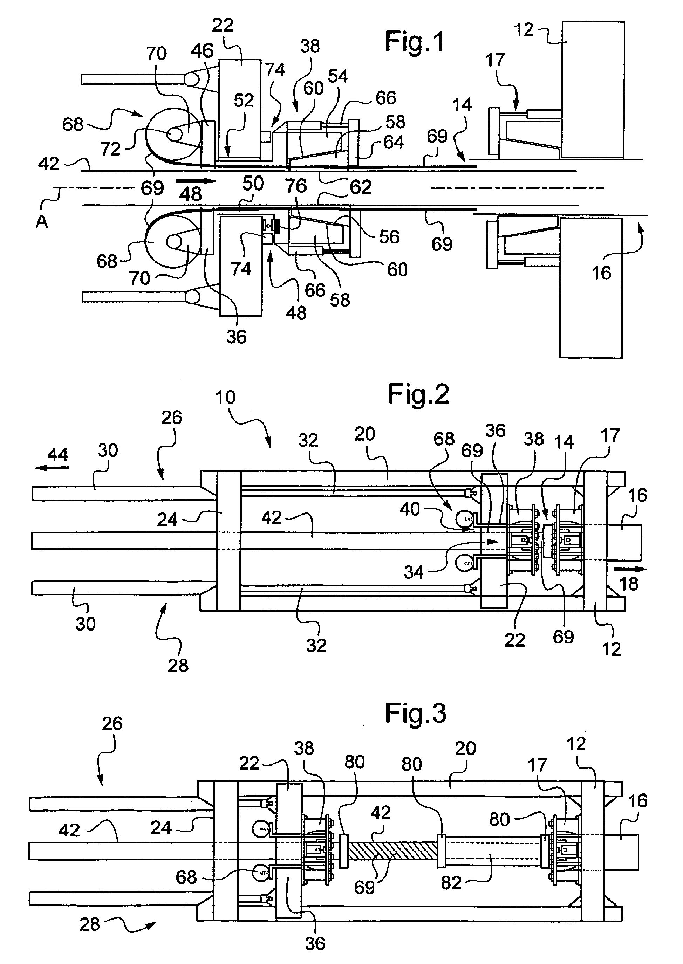

On se référera tout d'abord à la Figure 2 pour décrire des premiers éléments de l'installation 10 de fabrication des conduites tubulaires rigides selon l'invention. L'installation 10 comporte un bâti de maintien 12 destiné à maintenir l'extrémité d'entrée 14 d'un tube rigide externe 16 en position fixe. Le bâti de maintien 12 présente une plaque épaisse et des premiers moyens de serrage 17 du tube rigide externe 16 que l'on détaillera ci-après. Le tube rigide externe 16 s'étend longitudinalement en aval 18 du bâti de maintien 12, tandis qu'à l'opposé s'étend longitudinalement un châssis 20 à l'intérieur duquel est apte à être entraîné en coulissement un tablier 22. Le châssis 20 présente une plaque d'arrêt 24 opposée au bâti de maintien 12 à une distance comprise par exemple entre 5 et 20 m. La plaque d'arrêt 24 et le tablier 22 sont reliés par deux vérins périphériques 26, 28, le corps 30 de ces vérins périphériques étant solidaire de la plaque d'arrêt 24, tandis que l'extrémité de leur tige 32 est, elle, solidaire du tablier 22. Ce dernier présente un passage central 34, un barillet 36 installé à travers le passage central 34 et les seconds moyens de serrage 38 montés sur le barillet 36 en regard du bâti de maintien 12. En outre, le barillet 36 présente également un espace central 40 permettant le passage d'un tube interne rigide 42 apte à venir s'étendre longitudinalement à l'intérieur du châssis et à passer également librement à travers la plaque d'arrêt 24.

En aval 18 et en amont 44, le tube rigide externe 16 et respectivement le tube rigide interne 42, ont été réalisés par assemblage de sections de tube. Bien évidemment, le diamètre du tube rigide externe 16 est supérieur à celui du tube rigide interne 42 de manière à pouvoir engager ce dernier dans le premier. Ainsi, les seconds moyens de serrage 38 permettent d'enserrer le tube rigide interne 42 qui devient alors solidaire du tablier 22 ; et ce dernier est susceptible d'être entraîné en translation vers le bâti de maintien 12 grâce aux vérins périphériques 26, 28 pour entraîner à force, longitudinalement, le tube rigide interne 42 à l'intérieur du tube rigide externe 16.

On se reportera maintenant à la Figure 1 pour décrire plus en détail l'installation conforme à l'invention. Ainsi, on retrouve sur cette Figure 1 le bâti 12 équipée de ses premiers moyens de serrage 17 et le tablier 22 muni de son barillet 36 et de ses seconds moyens de serrage 38 solidaire du barillet 36. L'extrémité d'entrée 14 du tube rigide externe 16 est maintenue en position fixe enserrée à travers les premiers moyens de serrage 17, tandis que le tube rigide interne 42 est maintenu enserré par l'intermédiaire des seconds moyens de serrage 38.

Le barillet 36 présente deux flasques opposés 46, 48 reliées ensemble par une bague 50 montée libre en rotation à travers le passage central 34 par l'intermédiaire d'un palier 52. La bague 50 s'étend à travers le tablier 22, et l'un des flasques 48 situé en dehors du tablier s'étend en regard du bâti 12, tandis que l'autre flasque 36 s'étend à l'opposé du bâti 12 lui également à l'extérieur du tablier 22. Ainsi, le barillet 36 est libre en rotation autour d'un axe longitudinal A correspondant sensiblement à l'axe du tube rigide interne 42 et qui est sensiblement perpendiculaire au tablier 22. Cependant, d'une part des moyens de verrouillage en rotation du barillet 36 par rapport au tablier 22 sont prévus mais ne sont pas représentés ici, et d'autre part des moyens d'entraînement en rotation, par exemple un moteur électrique non représenté, sont également prévus. Les seconds moyens de serrage 38 sont installés précisément sur le flasque 48 en regard du bâti 12. Ces seconds moyens de serrage 38 comprennent une première couronne tronconique 54 centrée sur la bague 50 et laquelle présente une paroi interne 56 tronconique ouverte vers le bâti de maintien 12. À l'intérieur de cette couronne tronconique 54 viennent s'appliquer des mors 58 présentant une paroi inclinée 60 apte à venir en appui contre la paroi interne 56 tronconique. Les mors 58 présentent à l'opposé de leur paroi inclinée, une paroi de serrage 62 destinée à venir en prise contre le tube interne 22. Les mors 58 sont retenus par un disque d'entraînement 64 installé coaxialement en avant de la première couronne tronconique 54 et elle est reliée à cette dernière par des vérins hydrauliques d'accouplement 66. Ainsi, lorsque les vérins d'accouplement 66 sont rétractés selon une direction axiale, le disque d'entraînement 64 entraîne axialement les mors 58 vers l'intérieur de la première couronne tronconique 54 de telle sorte que, leur paroi inclinée 60 vient en glissement contre la paroi interne 56 tronconique de la première couronne 54 qui forme alors rampe et provoque ainsi le rapprochement radial des parois de serrage 62 et partant, le serrage du tube rigide interne 42.

À l'opposé, l'autre flasque 46 est équipé ici de deux bobines 68 diamétralement opposées sur lesquelles sont enroulés des câbles chauffants. Stocker des câbles en les enroulant autour d'une bobine est une manière extrêmement pratique de les ployer pour pouvoir ensuite les déployer. Ces deux bobines 68 sont installées de manière excentrée sur l'autre flasque 46 par l'intermédiaire d'une chape 70 dont l'arbre de rotation 72 est sensiblement perpendiculaire à l'axe longitudinal A. Les bobines 68 sont libres en rotation autour de leur arbre 72. En revanche, des moyens non représentés permettent de les bloquer en rotation. Les câbles chauffants 69 sont destinés à s'étendre à travers les flasques opposés 46, 48 et à travers la bague 50 et le tablier 22 à l'intérieur du passage central 34 autour du tube interne rigide 42. Ils sont également aptes à s'étendre à travers la première couronne tronconique 54 et entre les mors 58. Afin d'éviter leur endommagement, des moyens de guidage non représentés, de type à galets, sont prévus sur le barillet 36 le long du chemin de passage des câbles chauffants 69. Le barillet 36 constitue alors des moyens d'application des câbles chauffants 69 autour du tube rigide interne 42, tandis que les bobines 68 constituent des moyens de stockage des câbles chauffants 69.

Par ailleurs, le tablier 22 est muni de butée d'appui 74 en arrière du flasque 48 situé en regard du bâti 12, pour maintenir axialement le barillet 36 lorsque le tablier 22 est entraînée en translation axiale vers le bâti de maintien 12. En outre, des moyens élastiques 76 permettent d'amortir l'appui du flasque 48 contre les butées d'appui 74. En effet, les efforts qui s'exercent sur le barillet 36 lorsque le tube interne rigide 42 est engagé à force dans le tube externe rigide 16, sont relativement importants et entraînent un léger mouvement relatif axial du barillet 36 par rapport au tablier 22 que le palier 52 ne peut pas reprendre à lui seul.

À l'opposé, les premiers moyens de serrage 17 sont constitués d'éléments analogues aux seconds moyens de serrage 38 et ils sont activés dès le départ pour n'être désactivés que lorsque la conduite tubulaire rigide est terminée.

Ainsi, les éléments structurels étant définis, on se reportera à présent à la Figure 2, illustrant le point de départ du procédé d'installation des câbles chauffants 69 autour du tube rigide interne 42. Ainsi, dans cette position, les premiers moyens de serrage 17 sont activés, tandis que les seconds moyens de serrage 38 sont portés dans une position désactivée, c'est-à-dire que les vérins hydrauliques d'accouplement 66 illustrés sur la Figure 1 sont portés dans une position allongée et la paroi de serrage 62 des mors 58 est écartée du tube interne rigide 42 pour le relâcher. De plus, les câbles chauffants en prise dans l'annulaire entre le tube rigide externe 16 et le tube rigide interne 42, s'étendent à travers les seconds moyens de serrage 38, à travers le barillet 36 et le tablier 22 pour rejoindre les bobines 68. En outre, les moyens de verrouillage en rotation du barillet 36 sont désactivés pour que ce dernier puisse être entraîné en rotation.

Ensuite, les vérins périphériques 26, 28 sont commandés en rétraction pour entraîner en translation le tablier 22 dans un sens opposé au bâti de maintien 12, et simultanément le barillet 36 est entraîné en rotation, tandis que les bobines 68 sur lesquelles sont enroulés les câbles chauffants sont libres en rotation. En conséquence, le double mouvement de rotation et de translation permet de déployer et d'appliquer deux longueurs déterminées des deux câbles chauffants 69, diamétralement opposées l'une à l'autre, en spirale autour du tube rigide interne 42. Le mouvement de rotation du barillet 36 est alors stoppé dès que le tablier 22 se porte à distance donnée de la plaque d'arrêt 24.

On se référera à présent à la Figure 3 sur laquelle le tablier 22 est à l'arrêt et est situé à ladite distance donnée de la plaque d'arrêt 24, en regard du bâti de maintien 12. On retrouve sur cette Figure des câbles chauffants 69 enroulés autour du tube rigide interne 42.

En outre, dans cette position on installe des entretoises 80 autour du tube rigide interne 42 en maintenant les câbles chauffants 69 en appui contre la surface externe du tube interne rigide 42 et on recouvre ce dernier avec une garniture isolante 82 qui s'étend de manière cylindrique autour du tube rigide interne 42 et axialement entre les entretoises 80. Ensuite, et à l'inverse, on active les moyens de verrouillage en rotation du barillet 36 et les seconds moyens de serrage 38 du tube rigide interne 42. Puis, on provoque l'extension des vérins périphériques 26, 28 de manière à entraînée en translation le tablier 22 vers le bâti de maintien 12. De la sorte, on entraîne à force une longueur donnée de tube interne rigide 42 équipée de deux longueurs déterminées de câbles chauffants 69, des entretoises 80 et des garnitures 82 à l'intérieur du tube rigide externe 16. Cette longueur donnée de tube interne rigide 42, correspond à la course du tablier 22 entre la plaque d'arrêt 24 et le bâti de maintien 12.

De la sorte, en temps masqué, on applique les câbles chauffants 69 autour du tube rigide interne 42, ce qui permet de produire des conduites tubulaires rigides à double enveloppe équipées de câbles chauffants à un coût relativement faible, puisque le temps de fabrication n'est pas affecté par rapport aux installations classiques.

L'invention concerne également une conduite tubulaire rigide à double enveloppe obtenue selon le procédé décrit ci-dessus. Ces conduites à double enveloppe sont posées par la méthode dite du rigide déroulé. Aussi, pour éviter tout endommagement du câble de chauffage par un allongement dû à la flexion de la conduite lors de son enroulement sur les bobines de stockage du bateau, on prévoit une augmentation de la longueur du câble. La mise en oeuvre des câbles de chauffage en hélice selon la méthode précitée est alors particulièrement avantageuse.

Toutefois, si l'on utilise un câble élastiquement déformable, il n'est plus nécessaire d'ajouter une longueur de câble de chauffage supplémentaire, en particulier lorsqu'on installe la conduite selon la méthode du rigide déroulé, et on peut alors envisager de poser le câble parallèlement au tube rigide interne. Pour ce faire, on bloque alors la rotation du barillet.

On prévoit d'équiper la conduite tubulaire rigide à double enveloppe ainsi obtenue d'une alimentation électrique triphasée. On posera au moins un multiple de 3 câbles qui pourront être portés par une seule bobine. La capacité de stockage de la bobine dépendra de l'espace disponible. Il faudra alors prévoir des rechargements des bobines et des jonctions par soudure entre les câbles pour assurer une continuité.

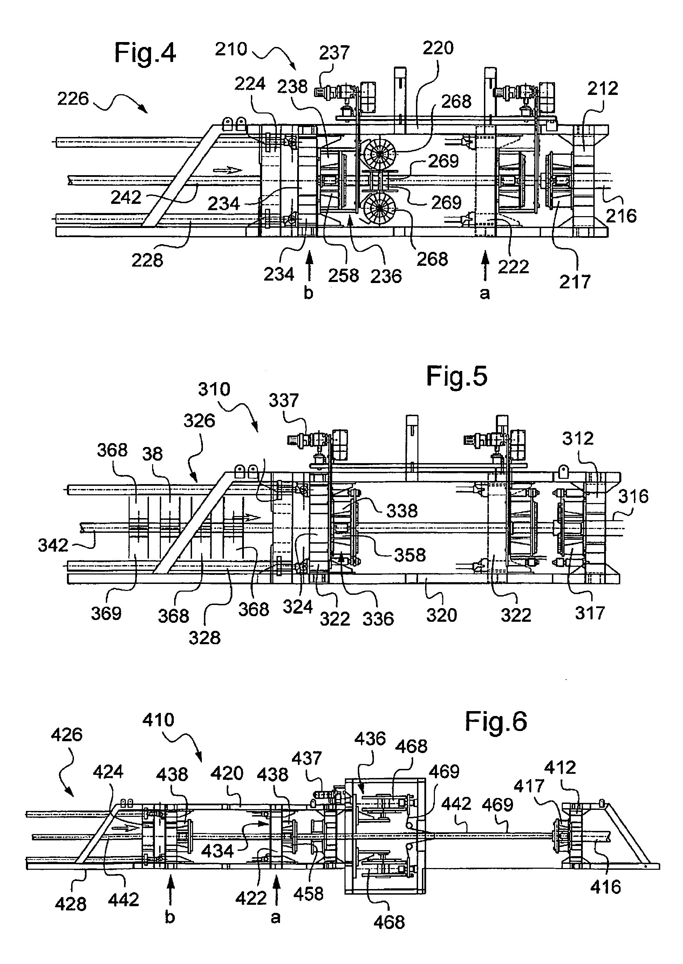

On décrira un deuxième mode de mise en oeuvre de l'invention en référence à la Figure 4. Les éléments communs avec le mode de mise en oeuvre précédent présentent la même référence précédée du chiffre « 2 » pour deuxième. Ainsi, la Figure 4 illustre une deuxième installation 210 comportant un deuxième bâti de maintien 212 pour maintenir un deuxième tube rigide externe 216. Ce dernier présente des deuxièmes premiers moyens de serrage 217. Un deuxième châssis 220 comprend un deuxième tablier 222 représenté dans ses deux positions extrêmes, l'une a, rapprochée du deuxième bâti de maintien 212, l'autre b, écartée de ce dernier. Le deuxième châssis 220 présente une deuxième plaque d'arrêt 224 et le deuxième tablier 222 y est relié par l'intermédiaire de deux deuxièmes vérins périphériques 226, 228. Le deuxième tablier 222 présente un deuxième passage central 234 pour permettre le passage d'un deuxième tube rigide interne 242 et un deuxième barillet 236 installé non plus à travers le passage central 234 mais sur la face du deuxième tablier 222 en regard du deuxième bâti de maintien 212. Des deuxièmes seconds moyens de serrage 238 sont également installés sur le deuxième tablier 222. Le deuxième barillet 236 est alors équipé de quatre deuxièmes bobines 268 de câbles chauffants, diamétralement opposées deux à deux, et agencées autour du deuxième tube rigide interne 242. Le deuxième barillet 236 est destiné à être entraîné en rotation par un moteur électrique 237 couplé à un variateur. Ces éléments d'entraînement sont bien évidemment solidaires du deuxième tablier 222 de manière à pouvoir être entraînés en translation avec lui.

Le mode de fonctionnement de la deuxième installation 210 est alors analogue à la précédente. En revanche, on prévoit un deuxième châssis 220 sensiblement plus long pour obtenir une course de deuxième tablier 222 d'environ 4,50 m sans être gêné par les deuxièmes bobines 268.

On se reportera à présent à la Figure 5 illustrant un troisième mode de mise en oeuvre de l'invention et sur laquelle les références des éléments communs sont précédées du chiffre « 3 » pour troisième. Une troisième installation 310 comprend ainsi un troisième bâti de maintien 312 pour maintenir un troisième tube rigide externe 316 et il présente des troisièmes premiers moyens de serrage 317. Un troisième châssis 320 comprend un troisième tablier 322 représenté dans ses deux positions extrêmes. Le troisième châssis 320 présente une troisième plaque d'arrêt 324 et le troisième tablier 322 y est relié par l'intermédiaire de deux troisièmes vérins périphériques 326, 328. Le troisième tablier 322 présente un troisième passage central 334 pour permettre le passage d'un troisième tube rigide interne 342 et un troisième barillet 336 installé sur la face du troisième tablier 322 en regard du troisième bâti de maintien 312. Le troisième barillet 336 est apte à être entraîné en rotation par l'intermédiaire d'un troisième moteur électrique 337. Des troisièmes seconds moyens de serrage 338 sont également installés sur le troisième barillet 336. En revanche, la troisième installation 310 est équipée de quatre troisièmes bobines 368, installées successivement autour du tube rigide interne 342 de manière à ce que ce dernier s'étende selon leur axe de rotation. Ainsi, le troisième tube rigide interne 342 est enfilé à travers chacune de ces troisièmes bobines 368. Chacune des troisièmes bobines 368 est alors équipée d'un bras tournant non représenté qui capte le câble chauffant pour le ramener le long du tube rigide interne 342. Les quatre bras sont orientés à 90° les uns des autres et sont solidaires en rotation. Les câbles chauffants traversent alors les troisièmes mors 358 installés sur le troisième barillet 336.

Bien évidemment, dans les deuxième et troisième modes de mise en oeuvre décrits ci-dessus, le moteur électrique couplé au réducteur est également équipé d'un ensemble d'embrayage et de frein. La vitesse du réducteur est également réglable. Aussi, l'entraînement en rotation des barillets 236, 336 peut être rendu indépendant du mouvement de translation des tabliers 222, 322. Toutefois, selon le mode de fonctionnement de travail, le déplacement du tablier provoque alors la rotation du barillet.

On décrira maintenant en référence à la Figure 6 un quatrième mode de mise en oeuvre de l'invention. Selon le principe adopté ci-dessus, les références des éléments communs aux modes de mise en oeuvre précédents sont précédées du chiffre « 4 » pour quatrième.

Une quatrième installation 410 comprend un quatrième bâti de maintien 412 pour maintenir un quatrième tube rigide externe 416 et il présente des quatrièmes premiers moyens de serrage 417. Un quatrième châssis 420 comprend un quatrième tablier 422 représenté également ici dans ses deux positions extrêmes a, b. Le quatrième châssis 420 présente une quatrième plaque d'arrêt 424 et le quatrième tablier 422 y est relié par l'intermédiaire de deux quatrièmes vérins périphériques 426, 428. Le quatrième tablier 422 présente un quatrième passage central 434 pour permettre le passage d'un quatrième tube rigide interne 442. En revanche, des quatrièmes moyens de serrage 338 sont installés sur la face du quatrième tablier 422 en regard du quatrième bâti de maintien 412 autour du quatrième passage central 434 et de manière fixe par rapport au tablier 422. Par ailleurs, un quatrième barillet 436 est installé, non plus solidaire du tablier 422, mais en position fixe par rapport au quatrième bâti de maintien 412 et selon une direction parallèle à l'axe du quatrième tube rigide interne 442, et aussi entre le quatrième tablier 422 et le quatrième bâti de maintien 412. Le quatrième barillet 436 est alors équipé de quatre quatrièmes bobines 468 de câbles chauffants 469, diamétralement opposées deux à deux, et agencées autour du quatrième tube rigide interne 442. Deux seulement de ces quatrièmes bobines 468 sont ici représentées. Le quatrième barillet 436 est destiné à être entraîné en rotation par un quatrième moteur électrique 437, couplé également à un variateur réglable.

Ainsi, selon ce quatrième mode de mise en oeuvre de l'invention, on applique des portions de longueur de câbles chauffants 469 le long du quatrième tube rigide interne 442, non plus lorsque le quatrième tablier 422 est entraîné en retour vers une position écartée b du bâti de maintien 412 mais lorsqu'au contraire, il est entraîné en translation vers la position rapprochée a, du bâti de maintien 412. Par conséquent, le quatrième barillet 436 est commandé en rotation lorsque le quatrième tablier 422 est entraîné vers le bâti de maintien 412 de manière à appliquer simultanément les quatre portions de câbles chauffants 469 en spirale autour du tube rigide interne 442. Le tube rigide interne 442 équipés des câbles chauffants 469 est alors engagé à force à l'intérieur du tube rigide externe 416.

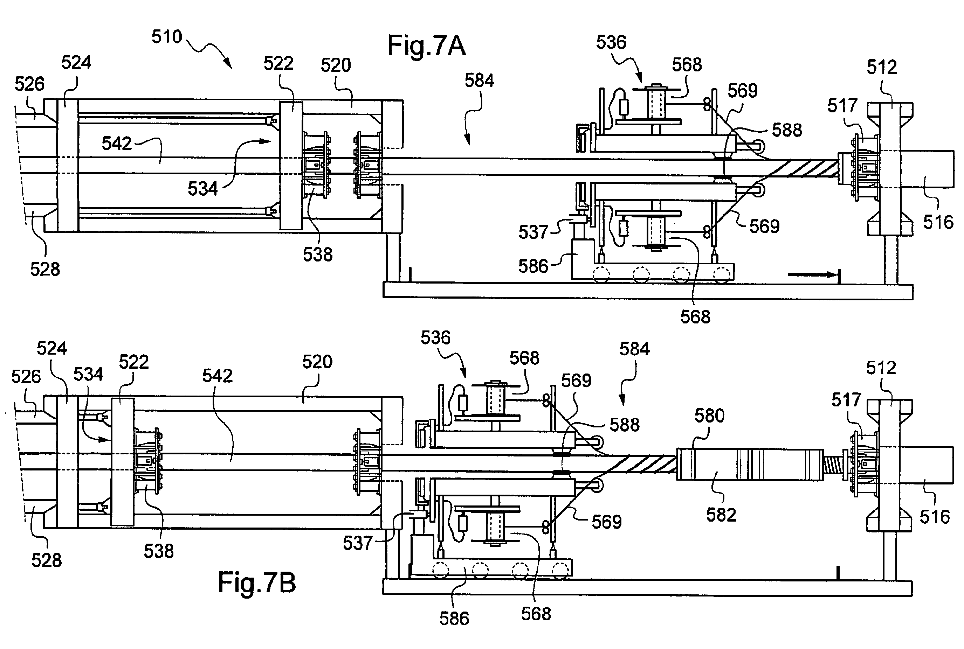

On décrira à présent en référence aux Figures 7A et 7B, un cinquième mode de mise en oeuvre de l'invention. Aussi, les références des éléments communs aux modes de mise en oeuvre précédents sont précédées du chiffre « 5 » pour cinquième.

Une cinquième installation 510 comprend un cinquième bâti de maintien 512 pour maintenir un cinquième tube rigide externe 516 et il présente des cinquièmes premiers moyens de serrage 517. Un cinquième châssis 520 comprend un cinquième tablier 522 représenté sur la Figure 7A, dans l'une de ses deux positions extrêmes et sur la Figure 7B, dans l'autre de ses deux positions extrêmes. Le cinquième châssis 520 présente une cinquième plaque d'arrêt 524 et le cinquième tablier 522 y est relié par l'intermédiaire de deux cinquièmes vérins périphériques 526, 528. Le cinquième tablier 522 présente un cinquième passage central 534 pour permettre le passage d'un cinquième tube rigide interne 542. En revanche, des cinquièmes moyens de serrage 538 sont installés sur la face du cinquième tablier 522 autour du cinquième passage central 534 et de manière fixe par rapport au tablier 522.

Par ailleurs, un espace de travail longitudinal 584 s'étend entre le cinquième tablier 522 et le cinquième bâti de maintien 512 ; et le cinquième barillet 536 est installé sur un chariot 586 mobile en translation à l'intérieur de cet espace de travail longitudinal entre le cinquième tablier 522 et le cinquième bâti de maintien 512, selon une direction parallèle à l'axe du cinquième tube rigide interne 542. Aussi, selon ce cinquième mode de mise en oeuvre de l'invention, il est nécessaire que le tablier 522 et le bâti de maintien 512 soit installé l'un de l'autre à une distance sensiblement supérieure à la distance qui les sépare, selon le premier mode de mise en oeuvre précité. Le chariot 586 présente en outre des moyens d'accrochage 588 permettant de le lier en translation au cinquième tube rigide interne 542.

Le chariot 586 est alors mobile en translation entre une position rapprochée du bâti de maintien 512 telle que représentée sur la Figure 7A, et une position écartée du bâti de maintien 512, mais rapprochée du cinquième tablier 522, telle que représentée sur la Figure 7B.

Le cinquième barillet 536 est alors équipé de quatre cinquièmes bobines 568 de câbles chauffants 569, diamétralement opposées deux à deux, et agencées autour du cinquième tube rigide interne 542. Deux seulement de ces cinquièmes bobines 568 sont ici représentées. Le cinquième barillet 536 est également entraîné en rotation par un cinquième moteur électrique 537, couplé à un variateur réglable.

Ainsi, selon ce cinquième mode de mise en oeuvre de l'invention, on applique des portions de longueur de câbles chauffants 569 le long du cinquième tube rigide interne 542, indépendamment du cinquième tablier 522, par l'intermédiaire du chariot 586 lorsque ce dernier est entraîné en retour de la position rapprochée du bâti de maintien 512 telle que représentée sur la Figure 7A, vers la position écartée du bâti de maintien 512 telle que représentée sur la Figure 7B.

Pendant, ou après que les câbles chauffants 569 sont déployés autour du tube rigide interne 542, le tablier 522 est entraîné en translation vers la plaque d'arrêt 524. En outre, après que les câbles chauffants 569 ont été déployés, la portion correspondante de tube rigide interne 542 est équipée d'une garniture isolante 582 et d'entretoises 580.

Ensuite, les cinquièmes seconds moyens de serrage 538 du cinquième tablier 522 rétracté ainsi que les moyens d'accrochage 588 du chariot 586 sont activés. Les cinquièmes vérins périphériques 526, 528 sont alors actionnés pour entraîner en translation le cinquième tablier 512 et partant, le tube rigide interne 542 équipé des câbles chauffants 569 et le chariot 586 qui en est solidaire. Le tube rigide interne 542 équipés des câbles chauffants 569 est alors engagé à force à l'intérieur du tube rigide externe 516, tandis que le chariot 586 retrouve sa position rapprochée du bâti de maintien 512 telle que représentée sur la Figure 7A.

## Revendications

1. Méthode de fabrication de conduites tubulaires rigides à double enveloppe pour le transport des hydrocarbures, ladite méthode étant du type selon laquelle :
- on fournit un tube rigide interne (42, 242, 342, 442) et un tube rigide externe (16, 216, 316, 416) destinés à être engagés l'un dans l'autre ;
- on fournit un bâti de maintien (12, 212, 312, 412) d'une extrémité d'entrée dudit tube rigide externe ;
- on fournit un tablier (22, 222, 322, 422) équipé de moyens de saisie activables (38, 238, 338, 438) pour saisir ledit tube interne rigide, ledit tablier étant mobile en translation entre une position rapprochée dudit bâti de maintien (12, 212, 312, 412) et une position écartée dudit bâti de maintien ;
- on active lesdits moyens de saisie activables (38, 238, 338, 438) et on entraîne ledit tablier (22, 222, 322, 422) vers ladite position rapprochée pour engager ledit tube rigide interne (42, 242, 342, 442) à l'intérieur dudit tube rigide externe (16, 216, 316, 416) en ménageant un espace annulaire entre les tubes rigides ;
- on désactive lesdits moyens de saisie activables (38, 238, 338, 438) pour libérer ledit tube rigide interne (42, 242, 342, 442) lorsque ledit tablier (22, 222, 322, 422) est entraîné en retour vers ladite position écartée ;
**caractérisée en ce qu'**on fournit en outre des câbles chauffants (69, 269, 369, 469) pour pouvoir appliquer une portion de longueur de câbles chauffants le long dudit tube rigide interne (42, 242, 342, 442) lorsque ledit tablier (22, 222, 322, 422) est entraîné en mouvement ;
et **en ce que** durant l'entraînement dudit tablier vers ladite position rapprochée, on engage ladite portion de longueur de câbles chauffants appliquée le long dudit tube rigide interne à l'intérieur dudit espace annulaire.

2. Méthode de fabrication de conduites tubulaires rigides selon la revendication 1, **caractérisée en ce qu'**on applique ladite portion de longueur de câbles chauffants en spirale autour dudit tube rigide interne (42, 242, 342, 442).

3. Méthode de fabrication de conduites tubulaires rigides selon la revendication 1 ou 2, **caractérisée en ce qu'**on applique simultanément une pluralité de portions de longueur de câbles chauffants (69, 269, 369, 469).

4. Méthode de fabrication de conduites tubulaires rigides selon l'une quelconque des revendications 1 à 3, **caractérisée en ce qu'**on ploie et on stocke lesdits câbles chauffants (69, 269, 369, 469), et **en ce qu'**on déploie ladite portion de longueur de câbles chauffants stockés pour appliquer ladite portion de longueur de câbles chauffants déployée le long dudit tube rigide interne (42, 242, 342, 442).

5. Méthode de fabrication de conduites tubulaires rigides selon les revendications 2 et 4, **caractérisée en ce qu'**on entraîne lesdits câbles chauffants (69, 269, 369, 469) ployés en rotation autour dudit tube rigide interne (42, 242, 342, 442) pour pouvoir appliquer ladite portion de longueur de câbles chauffants en spirale.

6. Méthode de fabrication de conduites tubulaires rigides selon l'une quelconque des revendications 1 à 5, **caractérisée en ce qu'**on applique une portion de longueur de câbles chauffants le long dudit tube rigide interne (42, 242, 342, 442) lorsque ledit tablier (22, 222, 322, 422) est entraîné en mouvement vers ladite position rapprochée.

7. Méthode de fabrication de conduites tubulaires rigides selon l'une quelconque des revendications 1 à 5, **caractérisée en ce qu'**on applique une portion de longueur de câbles chauffants le long dudit tube rigide interne (42, 242, 342, 442) lorsque ledit tablier (22, 222, 322, 422) est entraîné en retour vers ladite position écartée.

8. Méthode de fabrication de conduites tubulaires rigides selon les revendications 4 et 7, **caractérisée en ce qu'**on stocke lesdits câbles chauffants (69, 269, 369, 469) ployés sur ledit tablier mobile (22, 222, 322, 422).

9. Méthode de fabrication de conduites tubulaires rigides selon l'une quelconque des revendications 1 à 8, **caractérisée en ce qu'**on enserre radialement le tube rigide interne (42, 242, 342, 442) pour saisir ledit tube rigide interne.

10. Installation de fabrication des conduites tubulaires rigides à double enveloppe pour le transport des hydrocarbures, lesdites conduites tubulaires comprenant un tube rigide interne (42, 242, 342, 442) engagé à l'intérieur d'un tube rigide externe (16, 216, 316, 416), ladite installation comprenant un bâti de maintien (20, 220, 320, 420) d'une extrémité d'entrée dudit tube rigide externe (16, 216, 316, 416) et un tablier mobile (22, 222, 322, 422) en translation entre une position rapprochée dudit bâti de maintien (12, 212, 312, 412) et une position écartée dudit bâti de maintien, ledit tablier (22, 222, 322, 422) comprenant des moyens de saisie (38, 238, 338, 438) dudit tube interne rigide (42, 242, 342, 442) pour pouvoir saisir ledit tube interne rigide et engager ledit tube rigide interne à l'intérieur dudit tube rigide externe (16, 216, 316, 416) en ménageant un espace annulaire entre les deux tubes rigides lorsque ledit tablier (22, 222, 322, 422) est entraîné vers ladite position rapprochée, lesdits moyens de saisie (38, 238, 338, 438) étant aptes à libérer ledit tube rigide interne lorsque ledit tablier est entraîné en retour, vers ladite position écartée ;
**caractérisée en ce qu'**elle comprend en outre des organes de stockage (68, 268, 368, 468) pour stocker des câbles chauffants (69, 269, 369, 469) stockés et des moyens d'application (36, 236, 336, 436) pour pouvoir appliquer une portion de longueur de câbles chauffants stockés le long dudit tube rigide interne (42, 242, 342, 442) lorsque ledit tablier (22, 222, 322, 422) est entraîné en mouvement ;
et **en ce que** durant l'entraînement dudit tablier vers ladite position rapprochée, ladite portion de longueur de câbles chauffants appliquée le long dudit tube rigide interne (42, 242, 342, 442) est engagée à l'intérieur dudit espace annulaire.

11. Installation de fabrication des conduites tubulaires rigides selon la revendication 10, **caractérisée en ce que** lesdits organes de stockage (68, 268, 368, 468) desdits câbles chauffant stockés sont montés sur lesdits moyens d'application (36, 236, 336, 436).

12. Installation de fabrication des conduites tubulaires rigides selon la revendication 10 ou 11, **caractérisée en ce que** lesdits moyens d'application (36, 236, 336, 436) sont montés autour dudit tube rigide interne (42, 242, 342, 442) et à une distance déterminée dudit bâti de maintien (12, 212, 312, 412).

13. Installation de fabrication des conduites tubulaires rigides selon la revendication 10 ou 11, **caractérisée en ce que** lesdits moyens d'application (36, 236, 336, 436) sont montés sur ledit tablier.

14. Installation de fabrication des conduites tubulaires rigides selon la revendication 13, **caractérisée en ce que** lesdits moyens de saisie (38, 238, 338, 438) sont solidaires desdits moyens d'application (36, 236, 336, 436).

15. Installation de fabrication des conduites tubulaires rigides selon la revendication 10 ou 11, **caractérisée en ce qu'**elle comprend en outre un chariot (586) mobile en translation entre ledit tablier (524) et ledit bâti de maintien (512), et **en ce que** lesdits moyens d'application (536) sont montés sur ledit chariot (586) mobile.

16. Installation de fabrication des conduites tubulaires rigides selon l'une quelconque des revendications 10 à 15, **caractérisée en ce que** lesdits moyens d'application (36, 236, 336, 436) comprennent un barillet monté à rotation autour d'un axe sensiblement confondu avec ledit tube rigide interne (42, 242, 342, 442).

17. Installation de fabrication des conduites tubulaires rigides selon l'une quelconque des revendications 10 à 16, **caractérisée en ce que** lesdits organes de stockage (68, 268, 368, 468) comprennent une pluralité de bobines montées à rotation respectivement autour de leur axe sur lesdits moyens d'application (36, 236, 336, 436).

18. Installation de fabrication des conduites tubulaires rigides selon l'une quelconque des revendications 10 à 17, **caractérisée en ce que** lesdits moyens de saisie (38, 238, 338, 438) comprennent des mors activables (58, 258, 358, 458) aptes à enserrer radialement le tube rigide interne pour saisir ledit tube rigide interne (42, 242, 342, 442).

19. Conduite tubulaire rigide à double enveloppe obtenue par une méthode de fabrication selon l'une quelconque des revendications 1 à 9.

## Claims

1. A method of manufacturing rigid tubular pipes having a double casing for transporting hydrocarbons, said method being of the type in which:
- there are provided an internal rigid tube (42, 242, 342, 442) and an external rigid tube (16, 216, 316, 416) adapted to be engaged one in the other;
- there is provided a frame (12, 212, 312, 412) for holding an inlet end of said external rigid tube;
- there is provided an apron (22, 222, 322, 422) equipped with activatable grasping means for grasping said rigid internal tube, said apron being mobile in translation between a position near said holding frame (12, 212, 312, 412) and a position far from said holding frame;
- said activatable grasping means (38, 238, 338, 438) are activated and said apron (22, 222, 322, 422) is driven toward said near position to engage said internal rigid tube (42, 242, 342, 442) in the interior of said external rigid tube (16, 216, 316, 416) leaving an annular space between the rigid tubes;
- said activatable grasping means (38, 238, 338, 438) are then deactivated to release said internal rigid tube (42, 242, 342, 442) when said apron (22, 222, 322, 422) is driven in reverse toward said far position;
**characterized in that** there are further provided heating cables (69, 269, 369, 469) enabling a lengthwise heating cable portion to be applied along said internal rigid tube (42, 242, 342, 442) when said apron (22, 222, 322, 422) is driven in movement;
and **in that** during the driving of said apron toward said near position, said lengthwise heating cable portion applied along said internal rigid tube is engaged in the interior of said annular space.

2. The method claimed in claim 1 of manufacturing rigid tubular pipes, **characterized in that** said lengthwise heating cable portion is applied in a spiral around said internal rigid tube (42, 242, 342, 442).

3. The method claimed in claim 1 or claim 2 of manufacturing rigid tubular pipes, **characterized in that** a plurality of lengthwise heating cable portions (69, 269, 369, 469) are applied simultaneously.

4. The method claimed in any one of claims 1 to 3 of manufacturing rigid tubular pipes, **characterized in that** said heating cables (69, 269, 369, 469) are bent and stored, and **in that** said stored lengthwise heating cable portion is deployed to apply said deployed lengthwise portion of heating cables along said internal rigid tube (42, 242, 342, 442).

5. The method claimed in claims 2 and 4 of manufacturing rigid tubular pipes, **characterized in that** said bent heating cables (69, 269, 369, 469) are driven in rotation about said internal rigid tube (42, 242, 342, 442) to enable application of said lengthwise heating cable portion in a spiral.

6. The method claimed in any one of claims 1 to 5 of manufacturing rigid tubular pipes, **characterized in that** a lengthwise heating cable portion is applied along said internal rigid tube (42, 242, 342, 442) when said apron (22, 222, 322, 422) is driven in movement toward said near position.

7. The method claimed in any one of claims 1 to 5 of manufacturing rigid tubular pipes, **characterized in that** a lengthwise heating cable portion is applied along said internal rigid tube (42, 242, 342, 442) when said apron (22, 222, 322, 422) is driven in reverse toward said far position.

8. The method claimed in claims 4 and 7 of manufacturing rigid tubular pipes, **characterized in that** said bent heating cables (69, 269, 369, 469) are stored on said mobile apron (22, 222, 322, 422).

9. The method claimed in any one of claims 1 to 8 of manufacturing rigid tubular pipes, **characterized in that** the internal rigid tube (42, 242, 342, 442) is clamped radially to grasp said internal rigid tube.

10. An installation for manufacturing rigid tubular pipes having a double casing for the transport of hydrocarbons, said tubular pipes comprising an internal rigid tube (42, 242, 342, 442) engaged in the interior of an external rigid tube (16, 216, 316, 416), said installation comprising a frame (20, 220, 320, 420) for holding an inlet end of said external rigid tube (16, 216, 316, 416) and an apron (22, 222, 322, 422) mobile in translation between a position near said holding frame (12, 212, 312, 412) and a position far from said holding frame, said apron (22, 222, 322, 422) comprising means (38, 238, 338, 438) for grasping said rigid internal tube (42, 242, 342, 442) to enable grasping of said rigid internal tube and engagement of said internal rigid tube in the interior of said external rigid tube (16, 216, 316, 416) leaving an annular space between the two rigid tubes when said apron (22, 222, 322, 422) is driven toward said near position, said grasping means (38, 238, 338, 438) being adapted to release said internal rigid tube when said apron is driven in reverse toward said far position;
**characterized in that** it further comprises storage members (68, 268, 368, 468) for storing stored heating cables (69, 269, 369, 469) and means (36, 236, 336, 436) for enabling application of a lengthwise portion of stored heating cables along said internal rigid tube (42, 242, 342, 442) when said apron (22, 222, 322, 422) is driven in movement;
and **in that** during the driving of said apron toward said near position, said lengthwise heating cable portion applied along said internal rigid tube (42, 242, 342, 442) is engaged in the interior of said annular space.

11. The installation claimed in claim 10 for manufacturing rigid tubular pipes, **characterized in that** said storage members (68, 268, 368, 468) of said stored heating cables are mounted on said application means (36, 236, 336, 436).

12. The installation according to claim 10 or claim 11 for manufacturing rigid tubular pipes, **characterized in that** said application means (36, 236, 336, 436) are mounted around said internal rigid tube (42, 242, 342, 442) and at a particular distance from said holding frame (12, 212, 312, 412).

13. The installation claimed in claim 10 or claim 11 for manufacturing rigid tubular pipes, **characterized in that** said application means (36, 236, 336, 436) are mounted on said apron.

14. The installation claimed in claim 13 for manufacturing rigid tubular pipes, **characterized in that** said grasping means (38, 238, 338, 438) are fastened to said application means (36, 236, 336, 436).

15. The installation claimed in claim 10 or claim 11 for manufacturing rigid tubular pipes, **characterized in that** it further comprises a carriage (586) mobile in translation between said apron (524) and said holding frame (512), and **in that** said application means (536) are mounted on said mobile carriage (586).

16. The installation claimed in any one of claims 10 to 15 for manufacturing rigid tubular pipes, **characterized in that** said application means (36, 236, 336, 436) comprise a drum mounted to rotate about an axis substantially coinciding with said internal rigid tube (42, 242, 342, 442).

17. The installation claimed in any one of claims 10 to 16 for manufacturing rigid tubular pipes, **characterized in that** said storage members (68, 268, 368, 468) comprise a plurality of spools mounted to rotate about their respective axis on said application means (36, 236, 336, 436).

18. The installation claimed in any one of claims 10 to 17 for manufacturing rigid tubular pipes, **characterized in that** said grasping means (38, 238, 338, 438) comprise activatable jaws (58, 258, 358, 458) adapted to clamp the internal rigid tube radially to grasp said internal rigid tube (42, 242, 342, 442).

19. A rigid tubular pipe having a double casing and produced by a manufacturing method as claimed in any one of claims 1 to 9.

## Patentansprüche

1. Verfahren zur Herstellung von starren rohrförmigen Leitungen mit doppelter Ummantelung für den Transport von Kohlenwasserstoffen, wobei das Verfahren des Typs ist, wonach:
- ein inneres starres Rohr (42, 242, 342, 442) und ein äußeres starres Rohr (16, 216, 316, 416) bereitgestellt werden, die dazu bestimmt sind, ineinander eingeführt zu werden;
- ein Gestell zum Halten (12, 212, 312, 412) eines Eintrittsendes des äußeren starren Rohrs bereitgestellt wird;
- eine Schürze (22, 222, 322, 422) bereitgestellt wird, die mit aktivierbaren Greifmitteln (38, 238, 338, 438) zum Ergreifen des inneren starren Rohrs versehen ist, wobei die Schürze verschiebbar ist zwischen einer an das Haltegestell (12, 212, 312, 412) herangeführten Position und einer von dem Haltegestell beabstandeten Position;
- die aktivierbaren Greifmittel (38, 238, 338, 438) aktiviert werden und die Schürze (22, 222, 322, 422) in Richtung der herangeführten Position angetrieben wird, um das innere starre Rohr (42, 242, 342, 442) in das Innere des äußeren starren Rohrs (16, 216, 316, 416) einzuführen, indem ein ringförmiger Raum zwischen den starren Rohren gebildet wird;
- die aktivierbaren Greifmittel (38, 238, 338, 438) deaktiviert werden, um das innere starre Rohr (42, 242, 342, 442) freizugeben, wenn die Schürze (22, 222, 322, 422) in Richtung der beabstandeten Position zurückgetrieben wird;
**dadurch gekennzeichnet, dass** ferner Heizkabel (69, 269, 369, 469) bereitgestellt werden, um einen Längenabschnitt der Heizkabel entlang des inneren starren Rohrs (42, 242, 342, 442) aufzubringen, wenn die Schürze (22, 222, 322, 422) zur Bewegung angetrieben wird;
und dass während des Antriebs der Schürze in Richtung der herangeführten Position der Längenabschnitt der Heizkabel, der entlang des inneren starren Rohrs aufgebracht wurde, in das Innere des ringförmigen Raums eingeführt wird.

2. Verfahren zur Herstellung von starren rohrförmigen Leitungen nach Anspruch 1, **dadurch gekennzeichnet, dass** der Längenabschnitt der Heizkabel spiralförmig um das innere starre Rohr (42, 242, 342, 442) aufgebracht wird.

3. Verfahren zur Herstellung von starren rohrförmigen Leitungen nach Anspruch 1 oder 2, **dadurch gekennzeichnet, dass** eine Vielzahl von Längenabschnitten der Heizkabel (69, 269, 369, 469) gleichzeitig aufgebracht wird.

4. Verfahren zur Herstellung von starren rohrförmigen Leitungen nach einem der Ansprüche 1 bis 3, **dadurch gekennzeichnet, dass** die Heizkabel (69, 269, 369, 469) eingerollt und gelagert werden und dass der gelagerte Längenabschnitt der Heizkabel ausgerollt wird, um den ausgerollten Längenabschnitt der Heizkabel entlang des inneren starren Rohrs (42, 242, 342, 442) aufzubringen.

5. Verfahren zur Herstellung von starren rohrförmigen Leitungen nach Anspruch 2 und 4, **dadurch gekennzeichnet, dass** die eingerollten Heizkabel 869, 269, 369, 469) zur Drehung um das innere starre Rohr (42, 242, 342, 442) angetrieben werden, um den Längenabschnitt der Heizkabel spiralförmig aufbringen zu können.

6. Verfahren zur Herstellung von starrren rohrförmigen Leitungen nach einem der Ansprüche 1 bis 5, **dadurch gekennzeichnet, dass** ein Längenabschnitt der Heizkabel entlang des inneren starren Rohrs (42, 242, 342, 442) aufgebracht wird, wenn die Schürze (22, 222, 322, 422) zur Bewegung in Richtung der herangeführten Position angetrieben wird.

7. Verfahren zur Herstellung von starren rohrförmigen Leitungen nach einem der Ansprüche 1 bis 5, **dadurch gekennzeichnet, dass** ein Längenabschnitt der Heizkabel entlang des inneren starren Rohrs (42, 242, 342, 442) aufgebracht wird, wenn die Schürze (22, 222, 322, 422) in Richtung der beabstandeten Position zurückgetrieben wird.

8. Verfahren zur Herstellung von starren rohrförmigen Leitungen nach Anspruch 4 und 7, **dadurch gekennzeichnet, dass** die eingerollten Heizkabel (69, 269, 369, 469) auf der beweglichen Schürze (22, 222, 322, 422) gelagert werden.

9. Verfahren zur Herstellung von starren rohrförmigen Leitungen nach einem der Ansprüche 1 bis 8, **dadurch gekennzeichnet, dass** das innere starre Rohr (42, 242, 342, 442) in radialer Richtung eingespannt wird, um das innere starre Rohr zu ergreifen.

10. Anlage zur Herstellung von starren rohrförmigen Leitungen mit doppelter Ummantelung für den Transport von Kohlenwasserstoffen, wobei die rohrförmigen Leitungen ein inneres starres Rohr (42, 242, 342, 442) umfassen, das in das Innere eines äußeren starren Rohrs (16, 216, 316, 416) eingeführt wird, wobei die Anlage ein Gestell zum Halten (20, 220, 320, 420) eines Eintrittsendes des äußeren starren Rohrs (16, 216, 316, 416) und eine Schürze (22, 222, 322, 422) umfasst, die verschiebbar ist zwischen einer an das Haltegestell (12, 212, 312, 412) herangeführten Position und einer von dem Haltegestell beabstandeten Position, wobei die Schürze (22, 222, 322, 422) Mittel zum Ergreifen (38, 238, 338, 438) des inneren starren Rohrs (42, 242, 342, 442) umfasst, um das innere starre Rohr ergreifen und das innere starre Rohr in das Innere des äußeren starren Rohrs (16, 216, 316, 416) einführen zu können, indem ein ringförmiger Raum zwischen den zwei starren Rohren gebildet wird, wenn die Schürze (22, 222, 322, 422) in Richtung der herangeführten Position angetrieben wird, wobei die Greifmittel (38, 238, 338, 438) dafür geeignet sind, das innere starre Rohr freizugeben, wenn die Schürze, in Richtung der beabstandeten Position, zurückgetrieben wird;
**dadurch gekennzeichnet, dass** sie ferner Lagerorgane (68, 268, 368, 468) umfasst, um gelagerte Heizkabel (69, 269, 369, 469) zu lagern, und Aufbringungsmittel (36, 236, 336, 436), um einen Längenabschnitt der gelagerten Heizkabel entlang des inneren starren Rohrs (42, 242, 342, 442) aufzubringen, wenn die Schürze (22, 222, 322, 422) zur Bewegung angetrieben wird;
und dass während des Antriebs der Schürze in Richtung der herangeführten Position der entlang des inneren starren Rohrs (42, 242, 342, 442) aufgebrachte Heizkabel-Längsabschnitt in das Innere des ringförmigen Raums eingeführt wird.

11. Anlage zur Herstellung von starren rohrförmigen Leitungen nach Anspruch 10, **dadurch gekennzeichnet, dass** die Organe zum Lagern (68, 268, 368, 468) der gelagerten Heizkabel auf den Aufbringungsmitteln (36, 236, 336, 436) montiert sind.

12. Anlage zur Herstellung von starren rohrförmigen Leitungen nach Anspruch 10 oder 11, **dadurch gekennzeichnet, dass** die Aufbringungsmittel (36, 236, 336, 436) um das innere starre Rohr (42, 242, 342, 442) herum und in einem bestimmten Abstand zu dem Haltegestell (12, 212, 312, 412) montiert sind.

13. Anlage zur Herstellung von starren rohrförmigen Leitungen nach Anspruch 10 oder 11, **dadurch gekennzeichnet, dass** die Aufbringungsmittel (36, 236, 336, 436) auf der Schürze montiert sind.

14. Anlage zur Herstellung von starren rohrförmigen Leitungen nach Anspruch 13, **dadurch gekennzeichnet, dass** die Greifmittel (38, 238, 338, 438) mit den Aufbringungsmitteln (36, 236, 336, 436) fest verbunden sind.

15. Anlage zur Herstellung von starren rohrförmigen Leitungen nach Anspruch 10 oder 11, **dadurch gekennzeichnet, dass** sie ferner einen Schlitten (586) umfasst, der verschiebbar ist zwischen der Schürze (524) und dem Haltegestell (512), und dass die Aufbringungsmittel (536) auf dem beweglichen Schlitten (586) montiert sind.

16. Anlage zur Herstellung von starren rohrförmigen Leitungen nach einem der Ansprüche 10 bis 15, **dadurch gekennzeichnet, dass** die Aufbringungsmittel (36, 236, 336, 436) eine Trommel umfassen, die um eine Achse drehbar montiert ist, die im Wesentlichen mit dem inneren starren Rohr (42, 242, 342, 442) zusammenfällt.

17. Anlage zur Herstellung von starren rohrförmigen Leitungen nach einem der Ansprüche 10 bis 16, **dadurch gekennzeichnet, dass** die Lagerorgane (68, 268, 368, 468) eine Vielzahl von Spulen umfassen, die jeweils um ihre Achse drehbar auf den Aufbringungsmitteln (36, 236, 336, 436) montiert sind.

18. Anlage zur Herstellung von starren rohrförmigen Leitungen nach einem der Ansprüche 10 bis 17, **dadurch gekennzeichnet, dass** die Greifmittel (38, 238, 338, 438) aktivierbare Spannbacken (58, 258, 358, 458) umfassen, die dafür geeignet sind, das innere starre Rohr in radialer Richtung einzuspannen, um das innere starre Rohr (42, 242, 342, 442) zu ergreifen.

19. Starre Rohrleitung mit doppelter Ummantelung, die durch ein Herstellungsverfahren nach einem der Ansprüche 1 bis 9 hergestellt ist.
